(19) Europäisches Patentamt
European Patent Office
Office européen des brevets

(11) Publication number: 0 317 797
A2

(12) # EUROPEAN PATENT APPLICATION

(21) Application number: 88118126.7

(51) Int. Cl.[4]: C08L 63/00 , C08L 67/00

(22) Date of filing: 31.10.88

(30) Priority: 27.11.87 US 125859

(43) Date of publication of application:
31.05.89 Bulletin 89/22

(84) Designated Contracting States:
DE FR GB IT NL

(71) Applicant: GENERAL ELECTRIC COMPANY
1 River Road
Schenectady New York 12305(US)

(72) Inventor: Han, Choong Yol
8332 Kricklewood Court
Evansville Indiana 47715(US)
Inventor: DeRudder, James Louis
1622 Raintree Drive
Mount Vernon Indiana 47620(US)
Inventor: Hepp, Leonard Richard
5206 Bridgeview Drive
Evansville Indiana 47712(US)
Inventor: Brown, Sterling Bruce
3 Rosa Road
Schenectady New York 12308(US)

(74) Representative: Catherine, Alain
General Electric France Service de Propriété Industrielle 18 Rue Horace Vernet B.P. 76
F-92134 Issy-les-Moulineaux Cédex(FR)

(54) **Preparation of linear polyester compositions via polyepoxide concentrate.**

(57) Linear polyester compositions having high melt viscosities, especially under conditions of low shear, are prepared in a two-step method. The first step is the intimate blending of an inert polymer, preferably a polyester, polycarbonate or copolyestercarbonate, with a polyfunctional epoxyalkyl compound such as triglycidyl isocyanurate to form a concentrate. The second step is the reaction of said concentrate with a polyester, such as poly(ethylene terephthalate) or poly(butylene terephthalate), containing a measurable proportion of carboxylic acid end groups.

EP 0 317 797 A2

## PREPARATION OF LINEAR POLYESTER COMPOSITIONS VIA POLYEPOXIDE CONCENTRATE

This invention relates to linear polyester compositions. More particularly, it relates to the preparation of compositions comprising branched linear polyesters with advantageous melt viscosity properties and to concentrates useful for said preparation.

Resinous compositions comprising linear polyesters, exemplified by poly(ethylene terephthalate) and poly(butylene terephthalate) (hereinafter "PET" and "PBT", respectively), are in wide industrial use for the preparation of articles by such forming methods as injection molding. Many of their properties, including chemical stability, solvent resistance and low permeability to gas, make them attractive candidates for such forming operations as blow molding, profile extrusion and thermoforming. One problem in such operations is the relatively low melt viscosities of the polyesters, as a result of which the formed articles do not adequately retain their shape immediately after forming and before they have cooled.

One method of increasing the melt viscosity of a linear polyester, described in U.S. Patent 4,590,259, is to substantially increase its molecular weight. However, this can generally be achieved only with the use of specialized equipment.

Even if the polyester molecular weight is high, melt behavior often leaves something to be desired since it is essentially independent of shearing stresses imposed during forming. In the best situation, a resin suitable for blow molding, profile extrusion, thermoforming and the like will exhibit a non-Newtonian response, having a low viscosity under high shear conditions such as those encountered during extrusion and a high viscosity under conditions of low shear typical of a blow molded parison or a thermoformed article. High molecular weight polyesters under melt conditions have the disadvantage of being essentially Newtonian in their behavior.

In recent years, polyester-containing compositions having the desired melt viscosity properties have been developed. For example, Japanese Kokai 81/116749 describes the reaction of poly(ether ester) elastomers with triglycidyl isocyanurate (hereinafter "TGIC") to produce a material having desirable blow molding properties. Similar treatment of PBT is described in Japanese Kokai 75/96648.

It is believed that upon treatment with a polyepoxide such as triglycidyl isocyanurate, a branched polyester is formed by reaction of the carboxylic acid end groups of the polyester with each of the epoxy groups. By reason of this branching, the resinous composition displays low viscosity during extrusion through a die and high viscosity in parison or shaped form. These are precisely the properties desired for such forming operations.

A further advantage of this reaction is that it does not require specially designed facilities for polyester production. Ordinary equipment may be employed for the preparation of conventional polyesters such as PET, PBT and elastomeric polyesters. The conventional polyester may then be blended with the polyepoxide and extruded under ordinary conditions, whereupon further reaction and branching take place.

For optimum branching by the use of such compounds as triglycidyl isocyanurate, proportions up to about 2 parts by weight thereof per 100 parts of polyester are generally employed. The most convenient method of blending is melt blending, particularly by extrusion. However, such blending methods involve certain disadvantages.

In the first place, triglycidyl isocyanurate and similar compounds are typically supplied as powders which may agglomerate into coarse particles. These particles are difficult to mix uniformly with the polyester during extrusion, and may result in regions of gel formation which produce flaw sites in the formed article. In the second place, many polyepoxides of this type are irritants and/or health hazards. For example, triglycidyl isocyanurate has mutagenic properties. Contact with the body and inhalation should therefore be avoided as much as possible.

The present invention provides an improved method for the preparation of linear polyester-polyepoxide compositions which may be converted to branched polyesters with favorable melt viscosity properties. Said method produces homogeneous blends free from potential flaw sites and minimizes body contact with irritants and potentially harmful chemicals. It also minimizes the proportion of polyepoxide which must be used to provide the desired melt viscosity properties. Finally, it includes novel concentrates which are capable of conversion to branched polyester compositions having the desired properties.

In one of its aspects, the present invention is a method for preparing a branched polymer which comprises the steps of:

(I) forming a concentrate by intimately blending (A) at least one poly(O- or N-epoxyalkyl-substituted) cyclic amide, imide or imidate with (B) at least one linear polymer which is substantially inert to epoxy groups, and

(II) effecting reaction in the melt between said concentrate and (C) at least one linear polyester having a substantial proportion of free carboxylic acid groups;
reagent A being employed in the amount of about 0.1-3.0 parts by weight per 100 parts of the total of reagents B and C.

Reagent A used in the method of this invention is at least one poly(O- or N-epoxyalkyl-substituted) cyclic amide, imide or imidate, usually containing one and only one non-epoxy cyclic moiety although compounds with linked or fused moieties are also contemplated. It is most often a compound in which the epoxyalkyl group is bonded directly to the oxygen or nitrogen atom; however, compounds containing intervening structure, such as 2-carboglycidyloxyethyl compounds, may also be used. The presence of more than one epoxy group per molecule is essential. Three and only three of such groups are highly preferred, by reason of the ease of preparation therefrom of branched polyesters with a minimum of crosslinking and resulting gel formation. However, even compounds containing two epoxy groups are often suitable by reason of the production of hydroxy groups derived from the epoxide upon reaction with carboxylic acid moieties, said hydroxy groups being capable of later reaction with other such moieties to form branched structures.

Illustrative cyclic nuclei which may be present in reagent A are the triazine, barbiturate, hydantoin, uracil, pyromellitic diimide, piperazinedione and parabanate ring systems. As previously noted, the epoxy-containing functionalities may be present as substituents on oxygen or nitrogen atoms therein, with nitrogen atoms frequently being preferred. The most suitable compounds are triazine derivatives including triglycidyl cyanurate and TGIC. TGIC is particularly preferred by reason of its availability and particular suitability for the formation of branched polyesters. It has the formula

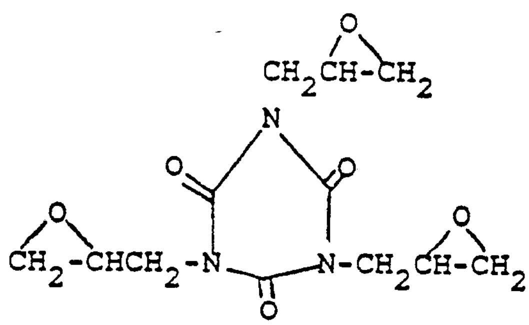

.

In step I of the method of this invention, a concentrate is formed by intimately blending reagent A with (B) at least one linear polymer which is substantially inert to epoxy groups. Said polymer preferably has substantial proportions (generally at least 40 and preferably 75-100 mole percent) of at least one of ester and carbonate structural units. It is apparent that this reagent may be a polyester, a polycarbonate, a copolyestercarbonate or a copolyester or copolycarbonate with other structural units, provided it is substantially inert to epoxy groups.

The preferred polymers for use as reagent B are homopolycarbonates. The structural units therein typically have the formula

(I) $-O-A^1-O-\overset{\overset{O}{\|}}{C}-$,

wherein $A^1$ is an aromatic radical. Suitable $A^1$ values include m-phenylene, p-phenylene, 4,4′-biphenylene, 2,2-bis(4-phenylene)propane, 2,2-bis(3,5-dimethyl-4-phenylene)-propane and similar radicals such as those which correspond to the dihydroxyaromatic compounds disclosed by name or formula (generic or specific) in U.S. Patent 4,217,438. Also included are radicals containing non-hydrocarbon moieties. These may be substituents such as chloro, nitro, alkoxy and the like, and also linking radicals such as thio, sulfoxy, sulfone, ester, amide, ether and carbonyl. Most often, however, all $A^1$ radicals are hydrocarbon radicals.

The $A^1$ radicals preferably have the formula

(II) $-A^2-Y-A^3-$,

wherein each of $A^2$ and $A^3$ is a divalent monocyclic aromatic radical and Y is a bridging radical in which one or two atoms separate $A^2$ from $A^3$. The free valence bonds in formula III are usually in the meta or para positions of $A^2$ and $A^3$ in relation to Y. Such $A^1$ values may be considered as being derived from bisphenols

of the formula $HO-A^2-Y-A^3OH$. Frequent reference to bisphenols will be made hereinafter, but it should be understood that $A^1$ values derived from suitable compounds other than bisphenols may be employed as appropriate.

In formula II, the $A^2$ and $A^3$ values may be unsubstituted phenylene or substituted derivatives thereof, illustrative substituents (one or more) being alkyl, halo (especially chloro and/or bromo), nitro, alkoxy and the like. Unsubstituted phenylene radicals are preferred. Both $A^2$ and $A^3$ are preferably p-phenylene, although both may be o-or m-phenylene or one o- or m-phenylene and the other p-phenylene.

The bridging radical, Y, is one in which one or two atoms, preferably one, separate $A^2$ from $A^3$. It is most often a hydrocarbon radical and particularly a saturated radical such as methylene, cyclohexylmethylene, 2-[2.2.1]-bicycloheptylmethylene, ethylene, 2,2-propylene, 1,1-(2,2-dimethylpropylene), 1,1-cyclohexylene, 1,1-cyclopentadecylene, 1,1-cyclododecylene or 2,2-adamantylene, especially a gem-alkylene radical. Also included, however, are unsaturated radicals and radicals which are entirely or partially composed of atoms other than carbon and hydrogen. Examples of such radicals are 2,2-dichloroethylidene, carbonyl, thio and sulfone. For reasons of availability and particular suitability for the purposes of this invention, the preferred radical of formula II is the 2,2-bis(4-phenylene)propane radical, which is derived from bisphenol A and in which Y is isopropylidene and $A^2$ and $A^3$ are each p-phenylene.

Copolyestercarbonates may also be used as component B. The ester structural units therein typically have the formula

$$\text{(III)} \qquad -O-R^1-O-\overset{\displaystyle O}{\overset{\|}{C}}-R^2-\overset{\displaystyle O}{\overset{\|}{C}}-,$$

wherein each $R^1$ is independently a divalent aliphatic, alicyclic or aromatic radical and each $R^2$ is independently a divalent aliphatic, alicyclic or aromatic radical containing about 2-10 and usually about 6-10 carbon atoms. Polyesters containing such units may be prepared by the known reaction of dihydroxy compounds with dicarboxylic acids or functional derivatives thereof such as anhydrides, acid chlorides or lower alkyl (especially methyl) esters, preferably the esters.

The $R^1$ radicals may be one or more aliphatic or alicyclic hydrocarbon radicals, alicyclic radicals being known to those skilled in the art to be equivalent to aliphatic radicals for the purposes of the invention. They are most often derived from aliphatic or alicyclic dihydroxy compounds such as ethylene glycol, 1,4-butanediol, propylene glycol, 1,3-propanediol, 1,6-hexanediol, 1,10-decanediol, 1,4-cyclohexanedimethanol and 2-butene-1,4-diol. Aromatic dihydroxy compounds, especially bisphenols such as bisphenol A, may also be employed. The $R^1$ radicals may also contain substituents which do not substantially alter the reactivity of the dihydroxy compound (e.g., alkoxy, halo, nitrile) or hetero atoms (e.g., oxygen or sulfur). The aliphatic and alicyclic $R^1$ radicals are usually saturated.

The $R^2$ radicals may be derived from such acids as succinic, adipic, maleic, isophthalic and terephthalic acids or similar substituted and hetero atom-containing acids.

Also contemplated are polymers in which at least a portion of the $R^1$ and/or $R^2$ values are soft reagent radicals such as poly(oxyethylene) or poly(oxybutylene). Such polymers may be prepared by incorporating compounds such as polyethylene glycol, caprolactone or dicarboxylic acids containing polyoxyalkylene segments in the polymerization reaction, and are typically elastomeric. Illustrative polyesters of this type are available from DuPont and General Electric under the trade names HYTREL and LOMOD, respectively.

Preferably, $R^1$ and $R^2$ are hydrocarbon radicals, typically containing about 2-10 and preferably 2-6 carbon atoms. Most often, $R^1$ is aliphatic and $R^2$ is aromatic.

Such copolyestercarbonates are typically obtained by the reaction of at least one dihydroxyaromatic compound with a mixture of phosgene and at least one dicarboxylic acid chloride, especially isophthaloyl chloride, terephthaloyl chloride or both.

For the purposes of this invention, it is essential that component B be substantially inert to epoxy groups. That is, it does not contain a significant proportion of carboxylic acid radicals or other radicals which will react with the epoxy groups in component A. The concentration of carboxylic acid groups, most often end groups, should be less than 5 and preferably less than 2 microequivalents per gram.

Also useful as component B are the impact modifying polymers disclosed hereinafter.

The proportion of reagent A in the concentrate is not critical. It is most often at least about 3 and preferably about 3-20 parts by weight per 100 parts of reagent B.

The preparation of the concentrate may be effected in solution or in the melt. Melt blending, typically involving extrusion, is generally preferred since it may be conveniently conducted in readily available equipment. Typically, reagents A and B are dry blended and are then extruded at temperatures in the range of about 200-300 °C.

The concentrate produced in step I is similar in appearance and in many physical properties to the

resin used as reagent B. No obvious indicia of phase separation are observed therein. The concentrate is dust-free, and skin contact with and inhalation of reagent B are easily avoided. It may be readily pelletized for easy handling. By the preparation of (for example) one batch of said concentrate, continued or repeated handling of reagent A is made unnecessary. Concentrates of this type are another aspect of the invention.

In step II, the concentrate prepared in step I is caused to react in the melt with (C) at least one linear polyester having a measurable proportion of free carboxylic acid groups, as determined by titration. These will usually be end groups, and their concentration is conventionally measured as microequivalents per gram.

For the most part, a carboxylic acid group concentration in the range of about 5-250 microequivalents per gram is suitable. Polyesters may degrade to some extent on extrusion, increasing the concentration of such end groups which is available for reaction. It is, however, often preferred to employ polyesters having a carboxylic acid end group concentration in the range of about 10-100, especially about 30-100 and preferably about 40-80 microequivalents per gram.

Reagent C is most desirably a poly(alkylene terephthalate), particularly PET or PBT and especially the latter. It usually has a number average molecular weight of at least about 4000, preferably in the range of about 10,000-70,000, as determined by gel permeation chromatography or by intrinsic viscosity (IV) at 30 °C in a mixture of 60% (by weight) phenol and 40% 1,1,2,2-tetrachloroethane.

Step II is frequently conveniently effected by dry blending the concentrate with reagent C to form an intimate solid blend which is then melt processed as previously described. The melt reaction conditions employed in step II are generally identical to melt blending conditions employed in step I. Reagent proportions, especially when reagent A is TGIC, are generally about 0.1-3.0 parts by weight and preferably about 0.4-0.6 part of reagent A per 100 parts of reagents B and C combined.

Other materials which are chemically substantially inert may be blended into the compositions prepared by the method of this invention, at any appropriate stage of blending and especially during step II. Such materials include fillers, reinforcing materials, flame retardants, pigments, dyes, stabilizers, anti-static agents, mold release agents and impact modifying polymers, the latter being exemplified by core-shell polymers having a core comprising alkyl acrylate, diene and/or styrene units and a shell comprising alkyl methacrylate units.

As previously noted, the compositions prepared by the method of this invention generally exhibit much lower melt viscosities when subjected to high shear than under low shear conditions. Thus, they may be conveniently extruded for purposes such as blow molding and profile extrusion. In some instances, said compositions may have higher melt viscosities after extrusion than blends of neat TGIC with polyesters in the same proportions; they frequently also exhibit other beneficial properties as compared with unmodified polyesters, particularly higher impact strength and improved ductility.

The invention is illustrated by the following examples.

Examples 1-2

The following polymers were dry blended with TGIC (5% by weight of total blend) and extruded on a twin screw extruder at 266 °C:

Example 1 - a copolyestercarbonate containing 78 mole percent ester and 22 mole percent carbonate units; having a weight average molecular weight of about 50,000, prepared by the interfacial reaction of bisphenol A with phosgene and a 93:7 (by weight) mixture of isophthaloyl and tetraphthaloyl chloride; and having a carboxylic acid end group concentration less than 2 microequivalents per gram.

Example 2 - a bisphenol A homopolycarbonate having a weight average molecular weight of about 71,000.

The extrudates, which were the desired concentrates, were quenched in water, pelletized and dried.

Examples 3-6

A PBT having a number average molecular weight (as determined by gel permeation chromatography) of about 50,000 and a carboxylic acid end group concentration of about 45 microequivalents per gram was dried for 4 hours at 120 °C in a circulating air oven and was then dry blended with the concentrates of Examples 1-2 in various proportions and extruded as described in said examples. The relevant proportions

and melt viscosities are given in the following table. Melt viscosities were determined at 250° C on a Tinius-Olsen melt plastometer, in comparison with controls comprising polyester blends from which the TGIC was absent.

| Example | Concentrate | % (wt.) TGIC | | Melt visc., poises x $10^2$ | |
|---|---|---|---|---|---|
| | | Based on total blend | Based on PBT | Product | Control |
| 3 | Ex. 1 | 0.5 | 0.56 | 132 | 90 |
| 4 | Ex. 1 | 1.0 | 1.25 | 352 | 116 |
| 5 | Ex. 2 | 0.5 | 0.56 | 195 | 81 |
| 6 | Ex. 2 | 1.0 | 1.25 | * | 106 |

*Did not flow.

## Claims

1. A method for preparing a branched polymer which comprises the steps of:
(I) forming a concentrate by intimately blending (A) at least one poly(O- or N-epoxyalkyl-substituted) cyclic amide, imide or imidate with (B) at least one linear polymer which is substantially inert to epoxy groups, and (II) effecting reaction in the melt between said concentrate and (C) at least one linear polyester having a substantial proportion of free carboxylic acid groups;
reagent A being employed in the amount of about 0.1-3.0 parts by weight per 100 parts of the total of reagents B and C.

2. A method according to claim 1 wherein reagent A contains a single triazine, barbiturate, hydantoin, uracil, pyromellitic diimide, piperazinedione or parabanate moiety and the epoxyalkyl groups therein are bonded directly to oxygen or nitrogen atoms.

3. A method according to claim 2 wherein reagent B has substantial proportions of at least one of ester and carbonate structural units.

4. A method according to claim 3 wherein reagent B is a polyester, polycarbonate or copolyestercarbonate.

5. A method according to claim 4 wherein reagent A is triglycidyl isocyanurate.

6. A method according to claim 5 wherein reagent B is a homopolycarbonate comprising structural units of the formula

$$\text{(I)} \quad -O-A^1-O-\overset{O}{\overset{\|}{C}}-,$$

wherein $A^1$ is an aromatic radical.

7. A method according to claim 6 wherein reagent C is a poly(ethylene terephthalate) or a poly(butylene terephthalate) having a carboxylic acid end group concentration in the range of about 10-100 microequivalents per gram.

8. A method according to claim 7 wherein $A^1$ has the formula

$$\text{(II)} \quad -A^2-Y-A^3,$$

wherein each of $A^2$ and $A^3$ is a divalent monocyclic aromatic radical and Y is a bridging radical in which one or two atoms separate $A^2$ from $A^3$.

9. A method according to claim 8 wherein step I is effected in the melt.

10. A method according to claim 8 wherein $A^2$ and $A^3$ are each p-phenylene and Y is isopropylidene.

11. A method according to claim 10 wherein the proportion of reagent A is about 3-20 parts per 100 parts of reagent B and about 0.4-0.6 part per 100 parts of the total of reagents B and C.

12. A method according to claim 11 wherein reagent C is a poly(butylene terephthalate) having a carboxylic acid end group concentration in the range of about 40-80 microequivalents per gram.

13. A method according to claim 12 wherein step I is effected in the melt.